# EUROPEAN PATENT APPLICATION

(11) **EP 4 422 308 A1**
(43) Date of publication of application: **28.08.2024**
(21) Application number: 24155890.7
(22) Date of filing: 06.02.2024
(51) Int. Cl.: H04W 72/02, H04W 72/12, H04W 72/25, H04W 88/06, H04W 72/40, H04W 16/14

(54) **RADIO RESOURCE MANAGEMENT IN CELLULAR COMMUNICATION NETWORKS**

(30) Priority: 23.02.2023 FI 20235217
(71) Applicant: Nokia Technologies Oy, 02610 Espoo (FI)
(72) Inventor: VAN PHAN, Vinh, Oulu (FI); WILDSCHEK, Torsten, Gloucester (GB); JACOBSEN, Thomas Haaning, Nørresundby (DK); SABOURI-SICHANI, Faranaz, Aalborg (DK); YU, Ling, Kauniainen (FI); LINDHOLM, Jari Olavi, Palojoki (FI)
(74) Representative: Script Intellectual Property LLP

(57) **Abstract**

According to an example aspect of the present invention, there is provided a method comprising, determining, by an apparatus, that co-channel resources in at least one selected slot for transmissions using a first radio access technology overlaps with co-channel resources for transmissions using a second radio access technology and that the co-channel resources are not reserved by another apparatus using the first radio access technology and transmitting by the apparatus, based at least on said determination, a co-channel occupancy message using at least a part of the co-channel resources in the at least one selected slot to occupy the co-channel resources in the at least one selected slot for transmissions using the first radio access technology wherein the at least one selected slot comprises feedback channel resources.

## Description

### RELATED APPLICATION

This application claims priority to FI Application No. 20235217 filed February 23, 2023, which is incorporated herein by reference in its entirety.

### FIELD

Various example embodiments relate in general to cellular communication networks and more specifically, to radio resource management in such networks.

### BACKGROUND

Efficient radio resource management is very important in various cellular communication networks, such as in cellular communication networks operating according to 5G radio access technology, to enable optimal performance. 5G radio access technology may also be referred to as new radio, NR, access technology. 3rd generation partnership project, 3GPP, develops standards for 5G/NR and some topics in the 3GPP discussions are related to radio resource management. There is a need to provide improved methods, apparatuses and computer programs related to radio resource management. Such improvements may be exploited in other cellular communication networks as well, like in 6G networks.

### SUMMARY

According to some aspects, there is provided the subject-matter of the independent claims. Some example embodiments are defined in the dependent claims.

The scope of protection sought for various example embodiments of the invention is set out by the independent claims. The example embodiments and features, if any, described in this specification that do not fall under the scope of the independent claims are to be interpreted as examples useful for understanding various example embodiments of the invention.

According to a first aspect of the present invention, there is provided an apparatus comprising at least one processor and at least one memory storing instructions that, when executed by the at least one processor, cause the apparatus at least to determine that co-channel resources in at least one selected slot for transmissions using a first radio access technology overlaps with co-channel resources for transmissions using a second radio access technology and that the co-channel resources are not reserved by another apparatus using the first radio access technology and transmit, based at least on said determination, a co-channel occupancy message using at least a part of the co-channel resources in the at least one selected slot to occupy the co-channel resources in the at least one selected slot for transmissions using the first radio access technology, wherein the at least one selected slot comprises feedback channel resources. The apparatus of the first aspect may be a user equipment using the first radio access technology for sidelink communications, or a control device configured to control the functioning thereof, possibly when installed therein.

Example embodiments of the first aspect may comprise at least one feature from the following bulleted list or any combination of the following features:
- wherein the stored instructions further cause, when executed by the at least one processor, the apparatus at least to operate using the first radio access technology for sidelink communications;
- wherein the stored instructions further cause, when executed by the at least one processor, the apparatus at least to transmit the co-channel occupancy message after determining that the apparatus has no other data to transmit;
- wherein the transmission of the co-channel occupancy message comprises a sidelink control information comprising an indication indicating whether the transmission and resource reservation indicated in the sidelink control information are for the co-channel occupancy message;
- wherein the transmission of the co-channel occupancy message is a broadcast, groupcast or unicast transmission with a non-dummy packet or a dummy packet with associated control information;
- wherein the co-channel occupancy message comprises a dummy packet;
- wherein the transmission of the co-channel occupancy message is a broadcast transmission without associated control information;
- wherein the co-channel occupancy message is a repetition or a retransmission of a message previously transmitted by the apparatus;
- wherein the stored instructions further cause, when executed by the at least one processor, the apparatus at least to determine a remaining packet delay budget and transmit, when the remaining packet delay budget comprises at least one of the at least one selected slot, the repetition or the retransmission of the message previously transmitted by the apparatus as the co-channel occupancy message within the remaining packet delay budget;
- wherein the stored instructions further cause, when executed by the at least one processor, the apparatus at least to retransmit the message before receiving feedback for the message previously transmitted by the apparatus as the co-channel occupancy message;
- wherein the stored instructions further cause, when executed by the at least one processor, the apparatus at least to transmit feedback or a coordination message together with the co-channel occupancy message when the apparatus is a receiving user equipment;
- wherein the stored instructions further cause, when executed by the at least one processor, the apparatus at least to cancel the transmission of the co-channel occupancy message after detecting that said another apparatus using the first radio access technology has reserved co-channel resources overlapping with or in the at least one selected slot overlapping with the resource reservation for the co-channel occupancy message;
- wherein the apparatus is a sidelink user equipment, or a control device configured to control the sidelink user equipment.

According to a second aspect of the present invention, there is provided a method, comprising determining, by an apparatus, that co-channel resources in at least one selected slot for transmissions using a first radio access technology overlaps with co-channel resources for transmissions using a second radio access technology and that the co-channel resources are not reserved by another apparatus using the first radio access technology and transmitting by the apparatus, based at least on said determination, a co-channel occupancy message using at least a part of the co-channel resources in the at least one selected slot to occupy the co-channel resources in the at least one selected slot for transmissions using the first radio access technology, wherein the at least one selected slot comprises feedback channel resources. The method may be performed by a user equipment using the first radio access technology for sidelink communications, or a control device configured to control the functioning thereof, possibly when installed therein.

According to a third aspect of the present invention, there is provided an apparatus, comprising means for determining that co-channel resources in at least one selected slot for transmissions using a first radio access technology overlaps with co-channel resources for transmissions using a second radio access technology and that the co-channel resources are not reserved by another apparatus using the first radio access technology and means for transmitting, based at least on said determination, a co-channel occupancy message using at least a part of the co-channel resources in the at least one selected slot to occupy the co-channel resources in the at least one selected slot for transmissions using the first radio access technology, wherein the at least one selected slot comprises feedback channel resources. The apparatus of the third aspect may be a user equipment using the first radio access technology for sidelink communications, or a control device configured to control the functioning thereof, possibly when installed therein.

According to a fourth aspect of the present invention, there is provided a non-transitory computer readable medium having stored thereon a set of computer readable instructions that, when executed by at least one processor, cause an apparatus to at least perform the method. According to a fifth aspect of the present invention, there is provided a computer program comprising instructions which, when the program is executed by an apparatus, cause the apparatus to carry out the method.

### BRIEF DESCRIPTION OF THE DRAWINGS

FIG. 1 illustrates an example of a network scenario in accordance with at least some example embodiments;
FIG. 2 illustrates co-channel resources in accordance with at least some example embodiments;
FIG. 3 illustrates an example apparatus capable of supporting at least some example embodiments;
FIG. 4 illustrates a signalling graph in accordance with at least some example embodiments;
FIG. 5 illustrates a flow graph of a method in accordance with at least some example embodiments.

### EXAMPLE EMBODIMENTS

Embodiments of the present disclosure provide improvements for radio resource management in cellular communication networks. More specifically, embodiments of the present disclosure enable occupying a co-channel resource when User Equipments, UEs, using two different Radio Access Technologies, RATs, may transmit on the co-channel resource.

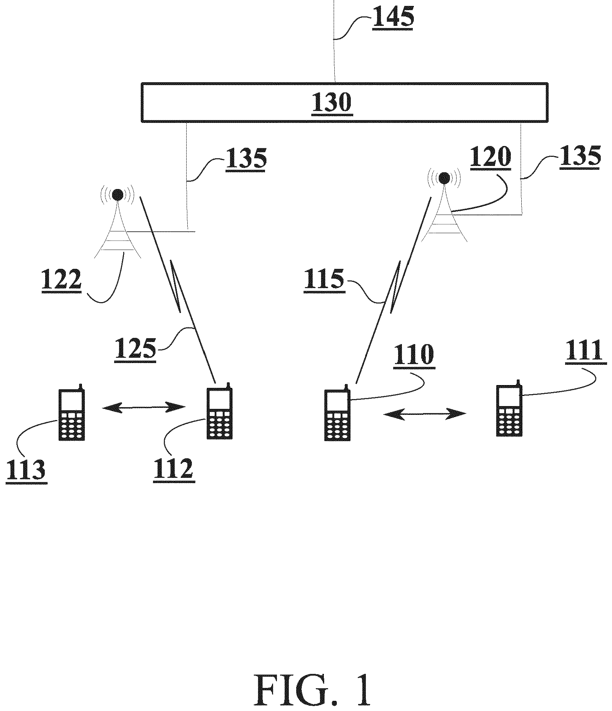

FIG. 1 illustrates an example of a network scenario in accordance with at least some example embodiments. According to the example scenario of FIG. 1, there may be a network scenario, comprising four UEs 110 - 113. The network scenario of FIG. 1 also comprises wireless network nodes 120 and 122, and core network 130. In some example embodiments, wireless network nodes 120 and 122 may be Base Stations, BSs.

First UE 110 may be connected to first wireless network node 120 via air interface 115 and second UE 112 may be connected to second wireless network node 122 via air interface 125. UEs 110 - 113 may comprise, for example, a smartphone, a cellular phone, a Machine-to-Machine, M2M, node, Machine-Type Communications, MTC, node, an Internet of Things, IoT, node, a Reduced Capability, RedCap, node, a car telemetry unit, a laptop computer, a tablet computer or, indeed, any kind of suitable wireless terminal.

First wireless network node 120 may be a network entity that configures some or all control information and allocates at least some resources for first UE 110. Second wireless network node 122 may be a network entity that configures some or all control information and allocates at least some resources for second UE 112. In some example embodiments, first wireless network node 120 may be a serving node for first UE 110 while second wireless network node 122 may be a serving node for second UE 112.

Air interface 115 between first UE 110 and first wireless network node 120 may be configured in accordance with a first RAT, which first UE 110 and first wireless network node 120 are configured to support. Air interface 125 between second UE 112 and second wireless network node 122 may be configured in accordance with a second RAT, which second UE 112 and second wireless network node 122 are configured to support. Examples of cellular RATs include Long Term Evolution, LTE, New Radio, NR, which may also be known as fifth generation, 5G, radio access technology, 6G, and MulteFire. A cellular RAT may be standardized by a 3^{rd} Generation Partnership Project, 3GPP, for example. UEs 110 - 113, and wireless network nodes 120 and 122 as well, may be configured to operate according to at least one 3GPP standard.

In some example embodiments, the first and second RATs may be different. For instance, the first RAT may be NR and the second RAT may be LTE. Hence, first UE 110 and first wireless network node 120 may be configured to operate using NR while second UE 112 and second wireless network node 122 may be configured to operate using LTE. First UE 110 and another first UE 111 may be configured to communicate with each other using Sidelink, SL, communications according to the first RAT. Similarly, second UE 112 and another second UE 113 may be configured to communicate with each other using SL communication according to the second RAT.

First UE 110 may not be able to communicate with second UE 112 over SL if first UE 110 is using the first RAT, like NR SL, and second UE 112 is using the second RAT, like LTE SL. First UE 110 may communicate with second UE 112 only in case first UE 110 has an LTE module (LTE UE) in addition to an NR module (NR UE). In such a case, the LTE module of first UE 110 may communicate with second UE 112. However, even if first UE 110 would not have the LTE module, first UE 110 and second UE 112 may be in proximity of, or close to, each other and their NR SL and LTE SL communications may use shared co-channel resources.

For example in the context of NR first wireless network node 120 may be referred to as a gNB while in the context of LTE second wireless network node 122 may be referred to as an eNB. In some example embodiments, wireless network nodes 120 and 122 may be referred to as Transmission and Reception Point, TRPs, or control multiple TRPs that may be co-located or non-co-located. In any case, example embodiments of the present disclosure are not restricted to any particular wireless technology. Instead, example embodiments may be exploited in any wireless communication system, wherein radio resource management is needed on co-channel resources.

Wireless network nodes 120 and 122 may be connected, directly or via at least one intermediate node, with core network 130 via wired interface 135. Core network 130 may be, in turn, coupled via interface 145 with another network (not shown in FIG. 1), via which connectivity to further networks may be obtained, for example via a worldwide interconnection network. In some example embodiments, first wireless network node 120 may be connected with second wireless network node 122 via an interbase station interface (not shown in FIG. 1), even though in some embodiments the interbase station interface may be absent. Wireless network nodes 120 and 122 may be connected, directly or via at least one intermediate node, with core network 130 or with another core network.

In some example embodiments, first UE 110 and second UE 112 may use at least partially overlapping resource pools in the same frequency channel or carrier. NR may be used as an example of a first RAT and LTE as an example of a second RAT. The overlapping resources of the resource pools configured for the first RAT and second RAT may be referred to as co-channel resources between the first RAT and the second RAT. If first UE 110 is an SL NR device and second UE 112 is an SL LTE device in proximity of first UE 110, first UE 110 and second UE 112 would not be able to communicate with each other. One issue in such a case may be that second UE 112 may be unaware of NR SL slot structure and unable to identify an SL transmission by first UE 110. For instance, second UE 112 may be unable to identify a Physical Sidelink Feedback Channel, PSFCH, transmission in slots with PSFCH in symbols 12 and 13, which may lead to an incorrect Automatic Gain Control, AGC, setting in the middle of a slot.

Moreover, for example in case of NR SL Physical Sidelink Control Channel, PSCCH, and Physical Sidelink Shared Channel, PSSCH, co-channel resources in all the LTE SL subframes, where NR SL PSFCH resources are located, may be occupied by NR UEs. Hence, LTE UEs may be forced to use other co-channel resources automatically. Thus, an NR UE that has a need to transmit on PSFCH, for example Hybrid Automatic Repeat reQuest, HARQ, feedback, may transmit without further consideration. That is, the NR UE may transmit without considering whether its PSFCH transmission may cause a negative impact, such as a collision or AGC issue to LTE UEs, or not.

Such a condition may be valid only if the load on NR SL is high enough whenever and wherever there is a need for PSFCH transmission. High enough may refer for example to a Received Signal Strength Indicator, RSSI, value that the LTE UE calculates for the subframe overlapping with the NR slot with PSFCH, being sufficiently high to not be included in the LTE candidate resource set. However, another issue may then arise if the load on NR SL is not high enough to meet the condition. There is therefore a need to provide enhancements for radio resource management, for example when UEs using a first RAT, like NR, and second RAT, like LTE, use the same, shared resources.

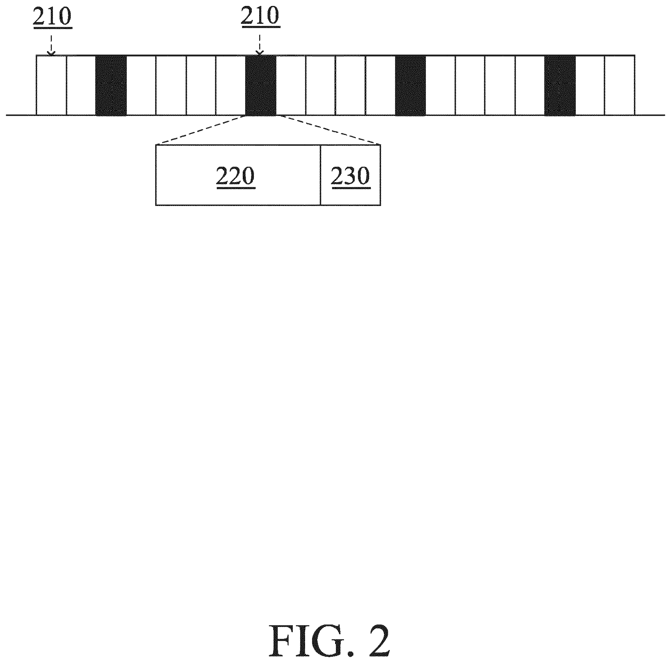

FIG. 2 illustrates co-channel resources in accordance with at least some example embodiments. In FIG. 2, co-channel resources are denoted by 210. For instance, one NR slot may be denoted by 210. In some example embodiments, one NR slot 210 may be fully overlapping with an LTE SL subframe.

In FIG.2, NR slots marked in black denote selected NR slots where NR SL PSFCH resources are located. These selected NR slots may be configured to NR SL UEs, like first UE 110 and another first UE 111, as a part of NR SL resource pool configuration. In some example embodiments, co-channel resources in the selected NR slots may need to be occupied for only NR SL transmissions, causing LTE SL transmissions to use co-channel resources not overlapping with the selected NR slots. This may be done to ensure that at least NR SL PSFCH transmissions may take place without causing AGC issues to LTE SL transmissions.

In some example embodiments, a Co-channel Occupancy Message, COM, denoted by 220, may be transmitted in selected NR slot(s) where NR SL PSFCH resources are located in order to occupy co-channel resources in the selected NR slot(s) for only NR SL transmissions. The COM content-wise may or may not be meaningful for communication or networking function. That is, in some example embodiments, the COM may be a dummy message. More specifically, co-channel resources for the COM transmission may be denoted by 220. In some example embodiments, NR SL PSCCH/PSCCH resources that may be selected and reserved for the COM transmission may be denoted by 220. Furthermore, a feedback channel resource is denoted by 230. In some example embodiments, NR SL PSFCH resources may be denoted by 230. That is, FIG. 2 may provide an illustration of the co-channel resources for a COM transmission in the case SL NR slot is equal and fully overlapping with SL LTE subframe. For instance, Subcarrier Spacing, SCS, may be 15kHz.

First UE 110, like an NR SL UE, may determine that co-channel resources in at least one selected SL slot 210 for transmissions using a first RAT, like NR, overlaps with co-channel resources for transmissions using a second RAT. First UE 110 may also determine that the co-channel resources in the at least one selected SL slot 210 are not reserved by another UE using the first RAT, like another first UE 111, such as another NR SL UE. In such a case, first UE 110 may transmit the COM 220 to occupy the co-channel resources in the at least one selected SL slot 210 for NR SL transmissions using at least a part of the co-channel resources selected and reserved by first UE 110 in the at least one selected SL slot 210. In some example embodiments, the at least one selected SL slot 210 may comprise feedback channel resources 230.

For instance, first UE 110 may sense that co-channel resources, for NR SL PSCCH/PSSCH transmissions in the selected NR SL slot(s) overlapping with LTE SL subframe(s) where NR SL PSFCH resources are located, are not reserved by other NR UE(s), like another first UE 111. The sensing may be based on decoding SCIs from other NR UE(s) and/or measuring channel occupancy ratio on the co-channel resources in the selected NR SL slot(s). In such a case, first UE 110 may select and reserve at least a part of the co-channel resources by transmitting the COM 220.

In some example embodiments, first UE 110 may select and reserve (in order to occupy) the co-channel resources by transmitting the COM using the co-channel resources when first UE 110 has no other data to transmit. That is, first UE 110 may transmit the COM after determining that the first UE 110 has no other data to transmit.

In some example embodiments, first UE 110 may transmit control information comprising an indication indicating whether a transmission and resource reservation indicated in the control information are for the COM. For instance, Sidelink Control Information, SCI, for a NR SL transmission from the NR UE may include an indication indicative of whether the SL transmission and the resource reservation indicated in the SCI is for the COM transmission, or not. Hence, other UE(s) may decide, after receiving the SCI from the NR UE, whether to receive the SL transmission or not, as well as selection and reservation of co-channel resources in selected NR slot(s) intended for COM transmissions including co-channel resources reserved for COM transmissions for their own SL transmissions.

A receiving UE may hence receive at least one first SCI of at least one first SL transmission from at least one NR SL UE, like first UE 110. The at least one first SCI may indicate the at least one first SL transmission and resource reservation indicated in the at least one first SCI are for a COM. The receiving UE may further select and reserve co-channel resources overlapping with, or in, at least one selected slot overlapping with the resource reservation of the at least one NR SL UE for the COM, wherein the at least one selected slot may comprise feedback channel resources. The receiving UE may then perform at least one second SL transmission using the selected and reserved co-channel resources, the at least one second SL transmission comprising at least one second SCI wherein resource reservation indicated in the at least one second SCI may comprise the selected and reserved co-channel resources.

In some example embodiments, the COM may comprise a dummy packet, like a broadcast dummy packet. For instance, the COM may be a predefined SL broadcast dummy packet. In such a case, other UEs may not need to receive or decode the broadcast dummy COM. However, in some example embodiments the broadcast dummy COM may be used for device testing purposes. The broadcast dummy COM might not impact the NR SL resource selection procedure, which may be achieved by either introducing a SCI format which may be then ignored in the resource selection procedure, or by setting a field or combination of fields in an existing SCI format to make it identifiable as a COM.

In some example embodiments, the COM may be a repetition or a retransmission of a message previously transmitted by first UE 110 to avoid wasting resources by transmitting the dummy packet as a COM. For instance, the NR UE may repeat or retransmit a message or a Transport Block, TB, under an ongoing transmission process such as a repetition of the message or a proactive blind retransmission of the TB. The NR UE may be for example configured by the non-access stratum layer to broadcast a discovery announcement from time to time, e.g., periodically but flexibly without strictly synchronized periodicity. The NR UE may further store the latest discovery announcement message on the access stratum layer and repeat it for the COM occasion within the validity lifetime of the latest discovery announcement message instead of the dummy packet.

In some example embodiments, there may be a remaining Packet Delay Budget, PDB, for any data to be transmitted over SL and first UE 110, like an NR UE, may base its decision to repeat data instead of the dummy packet on the COM occasion based on the remaining PDB. That is, a data packet (a message or a TB) is associated with a configured PDB, started from its arrival at a transmitter and the transmitter needs to transmit it before the PDB runs out. Thus, first UE 110 may determine the remaining PDB of the message or the TB that has been transmitted by first UE 110 and if the remaining PDB comprises the COM occasion, first UE 110 may perform the repetition or the retransmission of the message or the TB at the COM occasion as the COM. In this case, intended receiver(s) of the message or the TB may receive and decode the repetition or the retransmission of the message or the TB if the intended receiver(s) has (have) not been able to receive and decode the message or the TB previously.

In some example embodiments, first UE 110 may be configured to receive feedback on the at least one selected SL slot. For instance, first UE 110 may be an NR SL transmit UE that is expecting to receive feedback, like HARQ feedback, from at least one other NR SL receive UE on a control channel, like NR SL PSFCH allocated in the selected NR SL slot(s) overlapping with LTE subframe(s).

In such a case, first UE 110 may retransmit the message, as the COM, before receiving feedback for the message previously transmitted by first UE 110. For instance, first UE 110 may detect that co-channel resources, like NR SL PSCCH/PSSCH co-channel resources, in the selected NR SL slot(s) are not occupied by other NR UE(s) and based on the detection proactively retransmit a TB to occupy the co-channel resources. The TB may be retransmitted before receiving the feedback from at least one other NR SL receive UE for the previous feedback transmission of the TB. In this case, first UE 110 may transmit the COM using unicast or groupcast, as for the intended NR SL receive UE(s). However, in some example embodiments, as first UE 110 has transmitted in a recent feedback slot, like a PSFCH slot, first UE 110 might not perform sensing in the recent feedback slot and hence may have missed detecting reservations by the at least one other NR UE. In such a case, first UE 110 may cause a collision. This issue may be resolved by, for examples, retransmission using SL HARQ by the at least one other NR UE or notification using IUC from the at least one other NR UE to first UE 110 beforehand.

In some example embodiments, first UE 110 may be a receiving UE that is expected to transmit feedback, like HARQ feedback, or an coordination message, like an Inter-UE Coordination, IUC, notification on the feedback channel, like PSFCH allocated in the selected NR SL slot(s) overlapping with LTE subframe(s). In such a case, first UE 110 may detect that the co-channel resources, like PSSCH/PSCCH resources, in the selected NR SL slot(s) are not occupied by other NR UE(s) and based on the detection transmit the feedback or the coordination message, for example in a Medium Access Control, MAC, Control Element, CE, format along or together with the COM, possibly addressed to the NR SL transmit UE. In such a case, first UE 110 may transmit the COM using unicast.

In some example embodiments, first UE 110 may transmit an IUC Scheme 1 (referred to 3GPP Release 17 standards) request or coordination information. First UE 110 may further set higher layer parameter sl-TriggerConditionRequest or sl-TriggerConditionCoordInfo as 1, to indicate that the IUC request or information may be transmitted only along with data. In such a case, a receiving UE may deem the dummy COM packet as equivalent to data.

In some example embodiments, if first UE 110 is either the NR SL transmit UE or the NR SL receive UE in the above example embodiments, it may be expected to receive or transmit the feedback, like HARQ feedback on PSFCH allocated in the selected NR SL slot(s) overlapping with LTE subframe(s), and transmit the COM.

In some example embodiments, the SL transmission parameters of first UE 110 may comprise transmit power setting for transmitting the COM. For instance, the SL transmission parameters may be predefined and commonly configured to all NR UEs or may be left for first UE 110 to decide on-the-fly. For example, a common configuration may be applied in case the COM is transmitted using broadcast. First UE 110 may be further allowed to adapt the SL transmission parameters if the COM is transmitted using unicast or groupcast. In some example embodiments, the feedback, like SL HARQ, may be disabled for the COM transmission. It is noted that first UE 110 may determine which casting type is used for the COM transmission based on at least contents of the COM (dummy or not) and/or control information associated with the COM transmission (such as feedback or IUC message), as described above in some example embodiments.

The casting type may be for example broadcast, groupcast or unicast. The transmission of the COM may be a broadcast, groupcast or unicast transmission with a non-dummy packet or a dummy packet with associated control information. Alternatively, the transmission of the COM may be a broadcast transmission without associated control information when the COM comprises the dummy packet. The associated control information may be for example feedback or an IUC message.

In some example embodiments, first UE 110 may cancel transmission of the COM after detecting that at least one other UE has reserved the co-channel resources intended for the COM transmissions or the co-channel resources in the selected NR SL slot(s) intended for the COM transmissions by first UE 110. The detection may be based on NR SL sensing or inter-UE coordination, like received SCI or IUC information from the at least one other UE.

In some example embodiments, first UE 110 may determine whether to perform the COM transmission based at least on one the following criterion or any combination thereof:
- Observation of NR SL resource reservations, e.g., obtained in the course of routine NR SL sensing;
- Information about LTE SL resource occupancy, obtained, for example from a co-located LTE SL module. That is, first UE 110 may comprise a NR SL module and an LTE SL module. This may be needed because the own transmission of first UE 110 may always be in PSFCH slots as will be all other NR SL transmissions. Hence, first UE 110 may have limited visibility on other NR UEs' reservations if it has performed its own transmissions;
- First UE 110 may determine to transmit a COM message prior to a timeline t-*t_{com}* where it is at the transmission start in the NR slot with PSFCH.

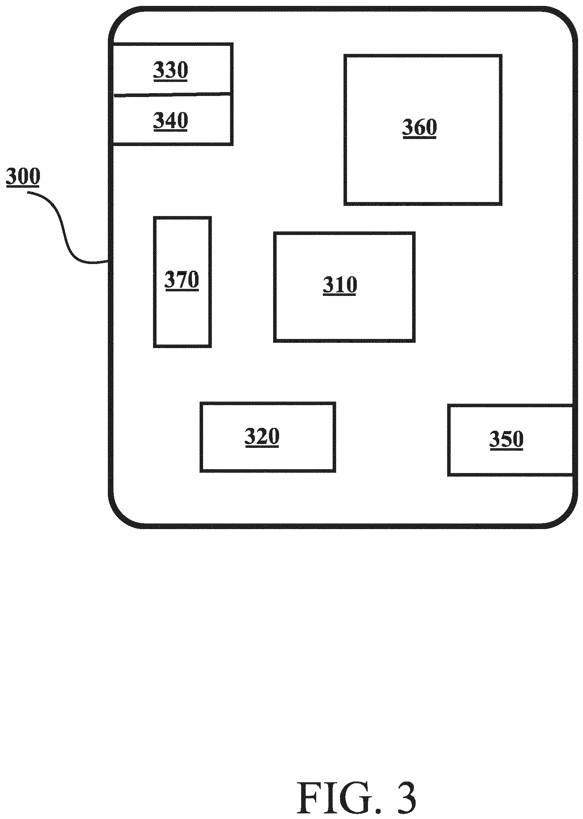

FIG. 3 illustrates an example apparatus capable of supporting at least some example embodiments. Illustrated is device 300, which may comprise, for example, first UE 110, or a device controlling functioning thereof, possibly when installed therein. Comprised in device 300 is processor 310, which may comprise, for example, a single- or multi-core processor wherein a single-core processor comprises one processing core and a multi-core processor comprises more than one processing core. Processor 310 may comprise, in general, a control device. Processor 310 may comprise more than one processor. Processor 310 may be a control device. Processor 310 may comprise at least one Application-Specific Integrated Circuit, ASIC. Processor 310 may comprise at least one Field-Programmable Gate Array, FPGA. Processor 310 may comprise at least one Qualcomm Snapdragon and/or Intel Atom processor. Processor 310 may comprise, for example, a Cortex-A8 processing core manufactured by ARM Holdings or a Steamroller processing core produced by Advanced Micro Devices Corporation. Processor 310 may be means for performing method steps in device 300, such as determining, causing transmitting and causing receiving. Processor 310 may be configured, at least in part by computer instructions, to perform actions.

A processor may comprise circuitry, or be constituted as circuitry or circuitries, the circuitry or circuitries being configured to perform phases of methods in accordance with example embodiments described herein. As used in this application, the term "circuitry" may refer to one or more or all of the following: (a) hardware-only circuit implementations, such as implementations in only analog and/or digital circuitry, and (b) combinations of hardware circuits and software, such as, as applicable: (i) a combination of analog and/or digital hardware circuit(s) with software/firmware and (ii) any portions of hardware processor(s) with software (including digital signal processor(s)), software, and memory(ies) that work together to cause an apparatus, such as a network function, to perform various functions) and (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

Device 300 may comprise memory 320. Memory 320 may comprise random-access memory and/or permanent memory. Memory 320 may comprise at least one RAM chip. Memory 320 may comprise solid-state, magnetic, optical and/or holographic memory, for example. Memory 320 may be at least in part accessible to processor 310. Memory 320 may be at least in part comprised in processor 310. Memory 320 may be means for storing information. Memory 320 may comprise computer instructions that processor 310 is configured to execute. When computer instructions configured to cause processor 310 to perform certain actions are stored in memory 320, and device 300 overall is configured to run under the direction of processor 310 using computer instructions from memory 320, processor 310 and/or its at least one processing core may be considered to be configured to perform said certain actions. Memory 320 may be at least in part comprised in processor 310. Memory 320 may be at least in part external to device 300 but accessible to device 300.

Device 300 may comprise a transmitter 330. Device 300 may comprise a receiver 340. Transmitter 330 and receiver 340 may be configured to transmit and receive, respectively, information in accordance with at least one cellular or non-cellular standard. Transmitter 330 may comprise more than one transmitter. Receiver 340 may comprise more than one receiver. Transmitter 330 and/or receiver 340 may be configured to operate in accordance with Global System for Mobile communication, GSM, Wideband Code Division Multiple Access, WCDMA, Long Term Evolution, LTE, and/or 5G/NR standards, for example.

Device 300 may comprise a Near-Field Communication, NFC, transceiver 350. NFC transceiver 350 may support at least one NFC technology, such as Bluetooth, Wibree or similar technologies.

Device 300 may comprise User Interface, UI, 360. UI 360 may comprise at least one of a display, a keyboard, a touchscreen, a vibrator arranged to signal to a user by causing device 300 to vibrate, a speaker and a microphone. A user may be able to operate device 300 via UI 360, for example to accept incoming telephone calls, to originate telephone calls or video calls, to browse the Internet, to manage digital files stored in memory 320 or on a cloud accessible via transmitter 330 and receiver 340, or via NFC transceiver 350, and/or to play games.

Device 300 may comprise or be arranged to accept a user identity module 370. User identity module 370 may comprise, for example, a Subscriber Identity Module, SIM, card installable in device 300. A user identity module 370 may comprise information identifying a subscription of a user of device 300. A user identity module 370 may comprise cryptographic information usable to verify the identity of a user of device 300 and/or to facilitate encryption of communicated information and billing of the user of device 300 for communication effected via device 300.

Processor 310 may be furnished with a transmitter arranged to output information from processor 310, via electrical leads internal to device 300, to other devices comprised in device 300. Such a transmitter may comprise a serial bus transmitter arranged to, for example, output information via at least one electrical lead to memory 320 for storage therein. Alternatively to a serial bus, the transmitter may comprise a parallel bus transmitter. Likewise processor 310 may comprise a receiver arranged to receive information in processor 310, via electrical leads internal to device 300, from other devices comprised in device 300. Such a receiver may comprise a serial bus receiver arranged to, for example, receive information via at least one electrical lead from receiver 340 for processing in processor 310. Alternatively to a serial bus, the receiver may comprise a parallel bus receiver.

Device 300 may comprise further devices not illustrated in FIG. 3. For example, where device 300 comprises a smartphone, it may comprise at least one digital camera. Some devices 300 may comprise a back-facing camera and a front-facing camera, wherein the back-facing camera may be intended for digital photography and the front-facing camera for video telephony. Device 300 may comprise a fingerprint sensor arranged to authenticate, at least in part, a user of device 300. In some embodiments, device 300 lacks at least one device described above. For example, some devices 300 may lack a NFC transceiver 350 and/or user identity module 370.

Processor 310, memory 320, transmitter 330, receiver 340, NFC transceiver 350, UI 360 and/or user identity module 370 may be interconnected by electrical leads internal to device 300 in a multitude of different ways. For example, each of the aforementioned devices may be separately connected to a master bus internal to device 300, to allow for the devices to exchange information. However, as the skilled person will appreciate, this is only one example and depending on the embodiment various ways of interconnecting at least two of the aforementioned devices may be selected without departing from the scope of the embodiments.

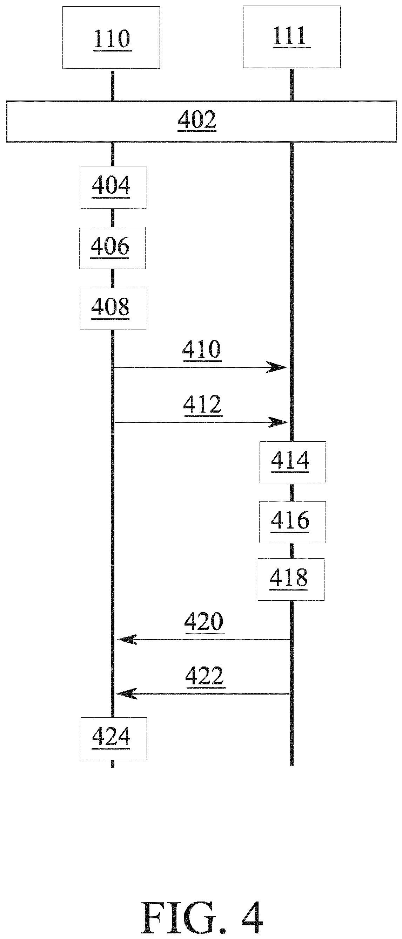

FIG. 4 illustrates a signalling graph in accordance with at least some example embodiments. On the vertical axes are disposed, from the left to the right, first UE 110 and another first UE 111 of FIG. 1. Time advances from the top towards the bottom.

At step 402, NR SL communications may be performed between first UE 110 and another first UE 111 in NR-LTE SL coexistence, i.e., when NR and LTE SL communications use overlapping co-channel resources. At step 404, first UE 110 may determine that co-channel resources in at least one selected slot where PSFCH resources are located, i.e., PSFCH slot, for NR SL transmissions overlap with co-channel resources for LTE SL transmissions and that the co-channel resources are not reserved by any other NR SL UE, like another first UE 111.

At step 406, first UE 110 may determine to transmit a COM, as there is no other data to transmit, comprising determining contents and a casting type for the COM transmission. The casting type may be based on at least the contents and/or control information associated with the COM transmission. At step 408, first UE 110 may select and reserve at least a part of the co-channel resources in the at least one selected slot for the COM transmission.

At step 410, first UE 110 may transmit a SCI indicating selected and reserved co-channel resources and an indication of the COM transmission. At step 412, first UE 110 may transmit the COM in an SL TB.

At step 414, another first UE 111 may determine whether to decode the COM transmission received at step 412, based on at least the SCI received at step 410. At step 416, another first UE 111 may determine to transmit SL data. At step 418, another first UE 111 may select and reserve co-channel resources in slot(s) including selected slot(s) where co-channel resources have been reserved for COM transmissions by other NR SL UE(s), comprising first UE 110.

At step 420, another first UE 111 may transmit a SCI indicating selected and reserved co-channel resources. At step 422, another first UE 111 may transmit SL data, e.g., an SL TB. At step 424, first UE 110 may cancel a subsequent COM transmission based on the SCI received from another first UE 111, at step 420. First UE 110 may further select and reserve co-channel resources in selected slot(s) intended for its COM transmission.

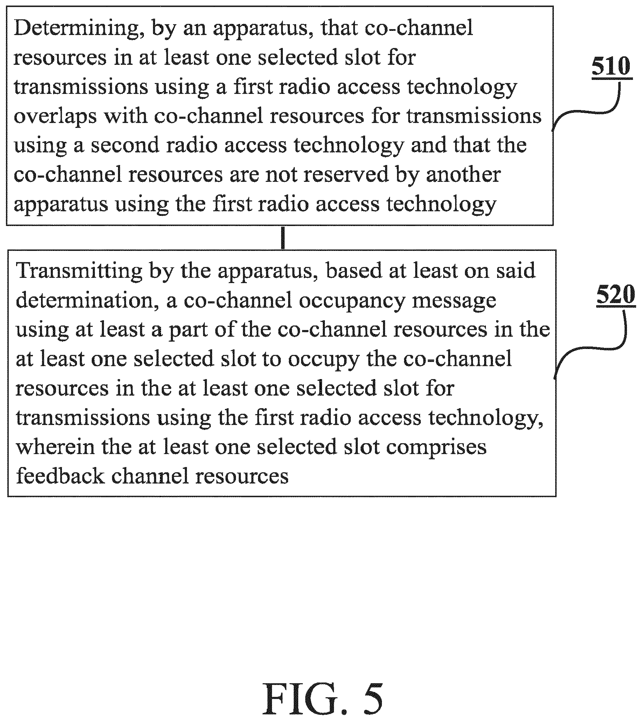

FIGURE 5 is a flow graph of a method in accordance with at least some example embodiments. The phases of the illustrated first method may be performed by first UE 110, or a device controlling functioning thereof, possibly when installed therein. That is, the apparatus of the method may be first UE 110.

The method may comprise, at step 510, determining, by an apparatus, that co-channel resources in at least one selected slot for transmissions using a first radio access technology overlaps with co-channel resources for transmissions using a second radio access technology and that the co-channel resources are not reserved by another apparatus using the first radio access technology. The method may also comprise, at step 520, transmitting by the apparatus, based at least on said determination, a co-channel occupancy message using at least a part of the co-channel resources in the at least one selected slot to occupy the co-channel resources in the at least one selected slot for transmissions using the first radio access technology, wherein the at least one selected slot comprises feedback channel resources.

It is to be understood that the example embodiments disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular example embodiments only and is not intended to be limiting.

Reference throughout this specification to one example embodiment or an example embodiment means that a particular feature, structure, or characteristic described in connection with the example embodiment is included in at least one example embodiment. Thus, appearances of the phrases "in one example embodiment" or "in an example embodiment" in various places throughout this specification are not necessarily all referring to the same example embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various example embodiments and examples may be referred to herein along with alternatives for the various components thereof. It is understood that such example embodiments, examples, and alternatives are not to be construed as de facto equivalents of one another, but are to be considered as separate and autonomous representations.

In an example embodiment, an apparatus, comprising for example first UE 110, may further comprise means for carrying out the example embodiments described above and any combination thereof. The apparatus may be an apparatus of a cellular communication network, such as a 5G network, and comprise means for operating in the cellular communication network.

In an example embodiment, a computer program comprising instructions which, when the program is executed by a computer, cause the computer to carry out a method in accordance with the example embodiments described above and any combination thereof. In an example embodiment, a computer program product, embodied on a non-transitory computer readable medium, may be configured to control a processor to perform a process comprising the example embodiments described above and any combination thereof.

In an example embodiment, an apparatus, comprising for example first UE 110, may further comprise at least one processor and at least one memory storing instructions that, when executed by the at least one processor, cause the apparatus at least to perform the example embodiments described above and any combination thereof. The apparatus may be an apparatus of a cellular communication network, such as a 5G network, and configured to operate in the cellular communication network.

Furthermore, the described features, structures, or characteristics may be combined in any suitable manner in one or more example embodiments. In the preceding description, numerous specific details are provided, such as examples of lengths, widths, shapes, etc., to provide a thorough understanding of example embodiments of the invention. One skilled in the relevant art will recognize, however, that the invention may be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the example embodiments in one or more particular applications, it will be apparent to those of ordinary skill in the art that numerous modifications in form, usage and details of implementation may be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in dependent claims are mutually freely combinable unless otherwise explicitly stated. Furthermore, it is to be understood that the use of "a" or "an", that is, a singular form, throughout this document does not exclude a plurality.

The expression "at least one of A or B" in this document means A, or B, or both A and B.

### INDUSTRIAL APPLICABILITY

At least some example embodiments find industrial application in cellular communication networks, such as 5G networks, and possibly in other cellular communication networks in the future as well.

### ACRONYMS LIST

- 3GPP: 3rd Generation Partnership Project
- AGC: Automatic Gain Control
- BS: Base Station
- CE: Control Element
- COM: Co-channel Occupancy Message
- D2D: Device-to-Device
- GSM: Global System for Mobile communication
- HARQ: Hybrid Automatic Repeat reQuest
- IoT: Internet of Things
- IUC: Inter-UE Coordination
- LTE: Long-Term Evolution
- M2M: Machine-to-Machine
- MAC: Medium Access Control
- NFC: Near-Field Communication
- NR: New Radio
- PDB: Packet Delay Budget
- PSCCH: Physical Sidelink Control Channel
- PSFCH: Physical Sidelink Feedback Channel
- PSSCH: Physical Sidelink Shared Channel
- RAT: Radio Access Technology
- RedCap: Reduced Capability
- RSSI: Received Signal Strength Indicator
- SCI: Sidelink Control Information
- SCS: Subcarrier Spacing
- SL: Sidelink
- TB: Transport Block
- TRP: Transmission and Reception Point
- UE: User Equipment
- UI: User Interface
- WCDMA: Wideband Code Division Multiple Access
- WiMAX: Worldwide Interoperability for Microwave Access
- WLAN: Wireless Local Area Network

### REFERENCE SIGNS LIST

| | |
|---|---|
| 110 | First UE, e.g., NR UE |
| 111 | Another first UE, e.g., another NR UE |
| 112 | Second UE, e.g., LTE UE |
| 113 | Another second UE, e.g., another LTE UE |
| 115, 125 | Air interfaces |
| 120, 122 | Wireless network nodes |
| 135, 145 | Wired interfaces |
| 130 | Core network |
| 210 | Co-channel resource |
| 220 | COM, e.g., a resource for the COM |
| 230 | Feedback resource |
| 300-370 | Structure of the apparatus of FIG. 3 |
| 402 - 424 | Steps in the signalling graph of FIG. 4 |
| 510 - 520 | Phases of the method in FIGURE 5 |

## Claims

1. An apparatus, comprising:
- means for determining that co-channel resources in at least one selected slot for transmissions using a first radio access technology overlaps with co-channel resources for transmissions using a second radio access technology and that the co-channel resources are not reserved by another apparatus using the first radio access technology; and
- means for transmitting, based at least on said determination, a co-channel occupancy message using at least a part of the co-channel resources in the at least one selected slot to occupy the co-channel resources in the at least one selected slot for transmissions using the first radio access technology, wherein the at least one selected slot comprises feedback channel resources.

2. The apparatus according to claim 1, wherein the apparatus further comprises:
- means for operating using the first radio access technology for sidelink communications.

3. The apparatus according to claim 1 or 2, wherein the apparatus further comprises:
- means for transmitting the co-channel occupancy message after determining that the apparatus has no other data to transmit.

4. The apparatus according to any of the preceding claims, wherein the transmission of the co-channel occupancy message comprises a sidelink control information comprising an indication indicating whether the transmission and resource reservation indicated in the sidelink control information are for the co-channel occupancy message.

5. The apparatus according to any of the preceding claims, wherein the transmission of the co-channel occupancy message is a broadcast, groupcast or unicast transmission with a non-dummy packet or a dummy packet with associated control information.

6. The apparatus according to any of claims 1-5, wherein the co-channel occupancy message comprises a dummy packet.

7. The apparatus according to claim 6, wherein the transmission of the co-channel occupancy message is a broadcast transmission without associated control information.

8. The apparatus according to any of claims 1-5, wherein the co-channel occupancy message is a repetition or a retransmission of a message previously transmitted by the apparatus.

9. The apparatus according to claim 8, wherein the apparatus further comprises:
- means for determining a remaining packet delay budget; and
- means for transmitting, when the remaining packet delay budget comprises at least one of the at least one selected slot, the repetition or the retransmission of the message previously transmitted by the apparatus as the co-channel occupancy message within the remaining packet delay budget.

10. The apparatus according to claim 8 or 9, wherein the apparatus further comprises:
- means for retransmitting the message before receiving feedback for the message previously transmitted by the apparatus as the co-channel occupancy message.

11. The apparatus according to any of the preceding claims, wherein the apparatus further comprises:
- means for transmitting feedback or a coordination message together with the co-channel occupancy message when the apparatus is a receiving user equipment.

12. The apparatus according to any of the preceding claims, wherein the apparatus further comprises:
- means for cancelling the transmission of the co-channel occupancy message after detecting that said another apparatus using the first radio access technology has reserved co-channel resources overlapping with or in the at least one selected slot overlapping with the resource reservation for the co-channel occupancy message.

13. The apparatus according to any of the preceding claims, wherein the apparatus is a sidelink user equipment, or a control device configured to control the sidelink user equipment.

14. A method, comprising:
- determining, by an apparatus, that co-channel resources in at least one selected slot for transmissions using a first radio access technology overlaps with co-channel resources for transmissions using a second radio access technology and that the co-channel resources are not reserved by another apparatus using the first radio access technology; and
- transmitting, based at least on said determination, a co-channel occupancy message using at least a part of the co-channel resources in the at least one selected slot to occupy the co-channel resources in the at least one selected slot for transmissions using the first radio access technology, wherein the at least one selected slot comprises feedback channel resources.

15. A computer readable medium having stored thereon a set of computer readable instructions that, when executed by at least one processor, cause an apparatus to at least perform:
- determining that co-channel resources in at least one selected slot for transmissions using a first radio access technology overlaps with co-channel resources for transmissions using a second radio access technology and that the co-channel resources are not reserved by another apparatus using the first radio access technology; and
- transmitting, based at least on said determination, a co-channel occupancy message using at least a part of the co-channel resources in the at least one selected slot to occupy the co-channel resources in the at least one selected slot for transmissions using the first radio access technology, wherein the at least one selected slot comprises feedback channel resources.
